# EUROPÄISCHE PATENTANMELDUNG

(11) **EP 3 088 358 A1**
(43) Veröffentlichungstag der Anmeldung: **02.11.2016**
(21) Anmeldenummer: 15165329.2
(22) Anmeldetag: 28.04.2015
(51) Int. Cl.: C01B 33/107, C07F 7/12, C22B 7/00

(54) **VERFAHREN ZUR AUFBEREITUNG FEINTEILIGER FESTSTOFFE BEI DER HERSTELLUNG VON CHLORSILANEN**

(71) Anmelder: Evonik Degussa GmbH, 45128 Essen (DE)
(72) Erfinder: Müh, Ekkerhard, Dr., 79618 Rheinfelden (DE); Rauleder, Hartwig, Dr., 79618 Rheinfelden (DE); Fey, Roland, 79713 Bad Säckingen (DE); Flesch, Jürgen, Dr., 63773 Goldbach (DE); Kropfgans, Frank, Dr., 79618 Rheinfelden (DE)

(57) **Zusammenfassung**

Gegenstand der Erfindung ist ein Verfahren zur Aufbereitung feinteiliger Feststoffe bei der Herstellung von Chlorsilanen, das dadurch gekennzeichnet ist, dass zumindest einer der Schritte a, b, c mindestens einmal durchgeführt wird, indem (a) die feinteiligen Feststoffe aufgeheizt werden, (b) das die Feststoffe umgebende Gas abgepumpt wird, (c) die Feststoffe mit zumindest einem weiteren Gas beströmt werden.

## Beschreibung

Die Erfindung betrifft ein Verfahren zur Aufbereitung feinteiliger Feststoffe, die bei der Herstellung von Chlorsilanen anfallen, durch Erhitzen, Spülen und/oder Evakuieren.

Chlorsilane wie Siliziumtetrachlorid (SiCl₄, abgekürzt *STC*), Trichlorsilan (HSiCl₃, abgekürzt *TCS*) und Dichlorsilan (H₂SiCl₂) stellen eine wichtige Stoffklasse mit einem breiten Anwendungsgebiet dar. So werden sie eingesetzt als Rohstoff zur Herstellung von SiO₂, dem sogenannten *fumed silica,* als Ausgangsmaterial für Organosilane und Kieselsäureester sowie als Edukte für Lichtwellenleiter und Halbleiter- bzw. Solar-Silizium.

Es ist daher von höchster technischer und wirtschaftlicher Bedeutung, Chlorsilane in großer Menge kostengünstig und sicher herstellen zu können.

Silizium (Si) und Chlorwasserstoff (HCl) und/oder Chlor (Cl) werden in einem Reaktor, z. B. Wirbelschichtreaktor oder Festbettreaktor oder Rührbettreaktor umgesetzt, wodurch sich anorganische Chlorsilane wie SiCl₄ und/oder HSiCl₃ und/oder H₂SiCl₂ oder Gemische daraus bilden und als Produktgase den Reaktor verlassen und anschließend weiter behandelt werden.

Chlorsilane können auch aus Si und Methylhalogenid, z. B. Methylchlorid CH₃Cl, erzeugt werden. Auf diese Weise erhält man organische Chlorsilane, beispielsweise Methyl(hydrogen)dichlorsilan, Methyltrichlorsilan, Dimetyldichlorsilan, Trimethylchlorsilan u.a.m.

Die Produktgase enthalten produktionsbedingt Feststoffe wie zum Beispiel Pulver und/oder Staub enthaltend Silizium, Eisen, Eisenchlorid und/oder Aluminiumchlorid. Beispielsweise sind Eisenchlorid und Aluminiumchlorid Reaktionsnebenprodukte, die davon herrühren, dass das eingesetzte Roh-Silizium diese Metalle in geringen Mengen als Kontaminationen enthält. Die Kontaminationen bleiben nach der Verflüssigung der Produktgase, der sogenannten Brüden, in der Flüssigphase zurück und setzen sich im Behälter für die Flüssigphase ab. Dadurch können sie aus dem gebildeten Chlorsilangemisch abgetrennt werden.

Auch in einem Reaktor für die Chlorsilanherstellung bleiben oben genannte Feststoffe zurück. Besonders beim Wirbelschichtverfahren zur Herstellung von Trichlorsilan und Siliziumtetrachlorid treten diese Feststoffe in Form von Pulver, Staub, zum Beispiel Filterstaub, und/oder Asche, zum Beispiel Heißgasfilterasche auf. Solche Feststoffe werden im Rahmen der Erfindung unter den Begriff "*feinteilige Feststoffe*" zusammengefasst.

Die feinteiligen Feststoffe weisen hauptsächlich Silizium und Eisen auf, und sie können außerdem Chlorverbindungen enthalten. Zusammen mit den Chlorverbindungen, die unter den Reaktionsbedingungen gasförmige Reaktionsprodukte sind, zum Beispiel TCS und STC, werden die feinteiligen Feststoffe aus dem Reaktor getragen.

Beim Wirbelschichtverfahren wird gemahlenes metallurgisches Silizium mit einem Durchmesser von etwa 500 µm mit Chlorwasserstoff umgesetzt. Während des Ablaufs der Reaktion werden die Siliziumteilchen immer kleiner und können den Reaktor schließlich als Stäube verlassen. Diese Stäube werden üblicherweise mittels Filtern oder Zyklonen abgetrennt, bevor die Reaktionsprodukte TCS und STC kondensiert werden. Da sie sehr fein sind und neben Eisen noch einen großen Siliziumanteil enthalten, sind sie ein wertvoller Rohstoff.

Weitere Silizium haltige Feststoffe fallen bei der Herstellung von Silizium aus Monosilan durch Abscheideprozesse an. Solche Feststoffe sind häufig Gemische aus Produktgrobanteilen, die über Siebe aus dem Prozess abgetrennt werden, sind ebenfalls Analysenrückstände und nicht spezifikationsgerechte Ware. Der Siliziumanteil beträgt oft mehr als 99 %.

Die feinteiligen Feststoffe stellen also einen wertvollen Rohstoff dar. Allerdings weisen sie einen hohen Gehalt an Halogenverbindungen auf, nämlich in Form von Metallhalogeniden, Siliziumhalogeniden und adsorbiertem Halogenwasserstoff. Das macht die Feststoffe für eine industrielle Nutzung, z. B. als Zuschlagsstoff in der Stahlindustrie, sehr nachteilbehaftet oder für eine solche Nutzung gar nicht einsetzbar. Denn durch den hohen Halogen- bzw. Halogenwasserstoffgehalt der genannten Feststoffe können Materialprobleme, z. B. Korrosion, hervorgerufen werden. Auch kann es zu Handhabungsproblemen kommen, z. B. durch Freisetzung von Halogenwasserstoffen aus dem Feststoff beim Entleeren oder Umfüllen von Gebinden. Chlorwasserstoff greift ebenfalls Schleimhäute, Haut und Augen des Menschen an. Deshalb ist bei der konventionellen Handhabung feinteiliger Feststoffe streng darauf zu achten, dass persönliche Schutzausrüstung getragen wird, die den unmittelbaren Kontakt der feinteiligen Feststoffe mit Haut, Augen und Schleimhäuten unterbindet.

Die Patentschrift DE 10 2009 037 155 B3 sieht vor, die aus der Wirbelschicht ausgetragenen Stäube in einem zweiten angeschlossen Wirbelschichtreaktor umzusetzen. Dieses Verfahren hat den Nachteil, dass der Großteil des Feststoffes auf Grund seiner extremen Feinteiligkeit auch aus dem zweiten Reaktor ausgetragen wird, ohne stofflich umgesetzt zu werden.

DE 10 2009 020 143 A1 offenbart ein Verfahren zur Aufarbeitung von Sägeabfällen aus der Waferherstellung. In diesem Fall werden Silizium und organische Verbindungen enthaltende Sägeabfälle auf einem Granulierteller granuliert und sollen so für den weiteren Einsatz in der Chlorsilanherstellung vorbereitet werden. Die Sägeslurries, aus denen diese Si haltigen Sägespäne oder Stäube abgetrennt werden, fallen als Filterkuchen oder Suspensionen dieser Abfälle in Silikonölen oder Polyethylenglykolen an. Doch ist die Separation der einzelnen Komponenten aufwändig, und der hohe Anteil organischer Verbindungen neben Silizium in diesem Strom führt in den Chlorsilanreaktoren zur Bildung zahlreicher unerwünschter Nebenprodukte. Zudem sind die aus dem kristallinen Material hergestellten Granulate mechanisch nur wenig stabil und zerfallen schnell wieder.

Eine weitere Möglichkeit, die oben genannten Feststoffe wieder zu größeren Aggregaten bzw. Stücken zu verbinden, besteht darin, diese zu schmelzen oder zu sintern. Dabei ist allerdings der aufgrund der hohen Schmelztemperaturen notwendige Energieaufwand nachteilig.

Es bestand daher die Aufgabe, die feinteiligen Feststoffe auf eine alternative Art und Weise weiter zu verarbeiten, dass sie dem Chlorsilanherstellprozess wieder zugeführt werden können.

Die Aufgabe wird gelöst durch ein Verfahren zur Entfernung von Halogenwasserstoffen aus feinteiligen Feststoffen, indem wenigstens einer der nachfolgend genannten Schritte zumindest einmal durchgeführt wird, nämlich, indem die feinteiligen Feststoffe aufgeheizt werden, das die Feststoffe umgebende Gas abgepumpt wird, und/oder die Feststoffe mit zumindest einem weiteren Gas beströmt werden.

Gegenstand der Erfindung ist also ein Verfahren zur Entfernung von Halogenwasserstoffen aus feinteiligen Feststoffen, die in einem Reaktor für die Herstellung von Chlorsilanen anfallen, welches dadurch gekennzeichnet ist, dass zumindest einer der folgend genannten Schritte a, b, c mindestens einmal durchgeführt wird, indem
(a) die feinteiligen Feststoffe aufgeheizt werden,
(b) das die Feststoffe umgebende Gas abgepumpt wird,
(c) die Feststoffe mit zumindest einem weiteren Gas beströmt werden.

Der Vorteil des beanspruchten Verfahrens besteht in seiner einfachen Durchführbarkeit.

Im Folgenden wird die Erfindung näher erläutert.

Vorzugsweise werden die feinteiligen Feststoffe dem Reaktor als Wirbelschichtasche entnommen. In dieser Form sind die Feststoffe besonders leicht zu fördern, und es können mit geringstem dem Fachmann bekannten Aufwand Energien eingetragen werden und/oder Gase entsprechend der verfahrensgemäßen Schritte eingeströmt werden.

Im Schritt a können die feinteiligen Feststoffe auf eine Temperatur von 30 bis 250 °C aufgeheizt werden. Weiterhin bevorzugte Temperaturbereiche liegen von 50 bis 150 °C, besonders von 80 bis 120 °C. Vorteilhaft ist ebenfalls, in dem Schritt b des erfindungsgemäßen Verfahrens die die Feststoffe umgebende Atmosphäre auf einen restlichen Druck von 0,1 bis 950 mbar abzupumpen. Weiterhin bevorzugte Drücke, die im Schritt b eingestellt werden können, liegen im Bereich von 5 bis 500 mbar und besonders bevorzugt im Bereich von 10 bis 200 mbar.

Bei allen Auswahlbereichen von Druck und/oder Temperatur oder als Alternative kann im Schritt c als weiteres Gas befeuchteter Stickstoff oder Wasserdampf eingesetzt werden. Als ebenfalls wirksam hat sich das Beströmen mit Luft erwiesen. Besonders bevorzugt können die feinteiligen Feststoffe mit Inertgasen beströmt werden, ausgewählt aus Argon oder Stickstoff. Ganz besonders bevorzugt kann Stickstoff eingesetzt werden. Beim Beströmen im Schritt c mit jeglichem ausgewählten Gas werden die Halogenverbindungen aus den feinteiligen Feststoffen ausgetrieben, wobei möglicherweise Restmengen an Halogenverbindungen in den Feststoffen verbleiben.

In dem erfindungsgemäßen Verfahren kann es weiterhin vorteilhaft sein, zunächst die Schritte a und c gleichzeitig durchzuführen, und anschließend Schritt b durchzuführen. Eine weitere Option besteht darin, die Schritte a und b gleichzeitig, und anschließend Schritt c durchzuführen.

Wird in dem erfindungsgemäßen Verfahren der Schritt a zeitgleich mit Schritt c durchgeführt, hat dies stets den Vorteil, das Verfahren besonders einfach durchführbar zu machen. Das zeigen die unten geschilderten Beispiele 1 und 2.

Vorteilhaft können beliebig zwei der Schritte a, b, oder c gleichzeitig durchgeführt werden, vorzugsweise die Schritte a und zugleich c, oder a und zugleich b. Bevorzugt wird der nicht simultan durchgeführte Schritt nach der simultanen Durchführung zweier Schritte durchgeführt, weiterhin bevorzugt auch vor dieser simultanen Durchführung. In einer weiteren Alternative des Verfahrens werden alle drei Schritte gleichzeitig durchgeführt.

Das erfindungsgemäße Verfahren wird im Folgenden anhand von Beispielen näher erläutert.

### Beispiele

Bei allen nachfolgend geschilderten Beispielen wurden zunächst 100 g einer stark nach HCl riechenden Wirbelschichtasche in einen 250 ml Vierhalskolben eingewogen. Der Kolben war mit einem Thermometer, einem Gaseinlaß mit Hahn und einem Gasauslaß mit Hahn ausgestattet. Vor dem Gasauslaß war ein mit Glaswolle gefülltes Glasrohr eingebaut.

Für die pH Tests wurden 2 g des Pulvers in 38 g Wasser gegeben, geschüttelt und nach einer Stunde über einen Faltenfilter filtriert. Der pH-Wert des klaren Filtrates wurde mittels eines kalibrierten pH-Meters der Firma Metrohm gemessen.

### Vergleichsbeispiel 1.

Über den Gaseinlaß wurde bei Umgebungstemperatur, unter der im Rahmen der Erfindung etwa 25 °C verstanden werden, über eine Zeitdauer von 5 Stunden Stickstoff mit einem Fluss von 50 l/h durch den Vierhalskolben gespült.

Direkt anschließend war an der Probe Chlorwasserstoff Geruch wahrnehmbar. Der pH-Wert lag bei 3,7. Der pH-Wert einer unbehandelten Probe lag ebenfalls bei 3,7.

### Vergleichsbeispiel 2.

Der Kolben wurde über 5 h bei Umgebungstemperatur auf 10 mbar evakuiert und danach mit Umgebungsluft belüftet. Direkt nach der Behandlung roch die Probe nicht nach HCl. Doch nach 1 Woche Lagerung in einer 100 ml Feststofflasche roch die Probe wieder merklich nach HCl.

### Beispiel 1.

Der Vierhalskolben wurde mittels eines Ölbades auf 50 °C erwärmt. Über den Gaseinlaß wurde während 5 h Stickstoff mit einem Fluss von 50 l/h durch den Kolben gespült.

Direkt nach der Behandlung roch die Probe nicht nach HCl. Die Probe wurde in einer 100 ml Feststofflasche gelagert und wöchentlich kontrolliert.

Im Unterschied zu den Vergleichsbeispielen war erst nach 3 Wochen wieder HCl Geruch wahrnehmbar.

### Beispiel 2.

Der Kolben wurde mittels eines Ölbades auf 80 °C erwärmt. Über den Gaseinlaß wurde während 5 h Stickstoff mit einem Fluss von 50 l/h durch den Kolben gespült.

Direkt nach der Behandlung roch die Probe nicht nach HCl. Die Probe wurde in einer 100 ml Feststofflasche gelagert und wöchentlich kontrolliert. Selbst 4 Wochen nach der Behandlung war kein HCl Geruch wahrnehmbar.

### Beispiel 3.

Der Kolben wurde mittels eines Ölbades auf 80 °C erwärmt. Über den Gaseinlaß wurde während 5 h Stickstoff mit einem Fluss von 50 l/h durch den Kolben gespült.

Danach wurde der Kolben während 5 min auf 10 mbar evakuiert und mit Stickstoff belüftet. Diese Prozedur umfassend Evakuieren und Belüften wurde zweimal wiederholt.

Direkt nach dieser Behandlung roch die Probe nicht nach HCl. Die Probe wurde in einer 100 ml Feststofflasche gelagert und wöchentlich kontrolliert. Auch 4 Wochen nach der Behandlung war kein HCl Geruch wahrnehmbar.

### Beispiel 4.

Der Kolben wurde mittels eines Ölbades auf 100 °C erwärmt. Über den Gaseinlaß wurde während 5 h mit befeuchtetem Stickstoff, erhalten mittels Durchleiten des Stickstoffes durch eine mit Wasser gefüllte Gaswaschflasche, bei einem Fluss von 50 l/h durch den Kolben gespült.

Direkt nach der Behandlung roch die Probe nicht nach HCl. Die Probe wurde in einer 100 ml Feststofflasche gelagert und wöchentlich kontrolliert. Auch 4 Wochen nach der Behandlung war kein HCl Geruch wahrnehmbar.

### Beispiel 5.

Der Kolben wurde mittels eines Ölbades auf 80 °C erwärmt. Anschließend wurde der Kolben während 5 h auf 10 mbar evakuiert und danach mit Umgebungsluft belüftet.

Direkt nach der Behandlung roch die Probe nicht nach HCl. Auch 4 Wochen nach der Behandlung war kein HCl Geruch wahrnehmbar.

## Patentansprüche

1. Verfahren zur Entfernung von Halogenwasserstoffen aus feinteiligen Feststoffen, die in einem Reaktor für die Herstellung von Chlorsilanen anfallen,
**dadurch gekennzeichnet,**
**dass** zumindest einer der folgend genannten Schritte a, b, c mindestens einmal durchgeführt wird, indem
(a) die feinteiligen Feststoffe aufgeheizt werden,
(b) das die Feststoffe umgebende Gas abgepumpt wird,
(c) die Feststoffe mit zumindest einem weiteren Gas beströmt werden.

2. Verfahren nach Anspruch 1, wobei die feinteiligen Feststoffe dem Reaktor als Wirbelschichtasche entnommen werden.

3. Verfahren nach Anspruch 1, wobei im Schritt a die feinteiligen Feststoffe auf eine Temperatur von 30 bis 250 °C aufgeheizt werden.

4. Verfahren nach Anspruch 1, wobei im Schritt b die die Feststoffe umgebende Atmosphäre auf einen restlichen Druck von 0,1 bis 950 mbar abgepumpt wird.

5. Verfahren nach Anspruch 1, wobei im Schritt c als weiteres Gas befeuchteter Stickstoff eingesetzt wird.

6. Verfahren nach Anspruch 1, wobei zunächst die Schritte a und c gleichzeitig durchgeführt werden, und anschließend Schritt b durchgeführt wird.

7. Verfahren nach Anspruch 1, wobei die Schritte a und c gleichzeitig durchgeführt werden.

8. Verfahren nach Anspruch 1, wobei die Schritte a und b gleichzeitig durchgeführt werden, und anschließend Schritt c durchgeführt wird.
